# FASCICULE DE BREVET EUROPEEN

(11) **EP 2 073 367 B1**
(45) Date de publication et mention de la délivrance du brevet: **23.02.2011**
(21) Numéro de dépôt: 08171539.3
(22) Date de dépôt: 12.12.2008
(51) Int. Cl.: H02M 5/458, H02H 7/12

(54) **Générateur de tension alternative doté d'un dispositif de limitation de courant**
Wechselspannungsgenerator ausgestattet mit einem Strombegrenzer
Alternating voltage generator equipped with a current limiting device

(30) Priorité: 17.12.2007 FR 0759870
(43) Date de publication de la demande: 24.06.2009
(73) Titulaire: Schneider Electric Industries SAS, 92500 Rueil-Malmaison (FR)
(72) Inventeur: Ecrabey, Jacques, 07500 Guilherand Granges (FR); Carcouet, Sébastien, 38450 Vif (FR)
(74) Mandataire: Dufresne, Thierry

(56) Documents cités:
- JP-A- 3 065 020
- JP-A- 3 082 373
- JP-A- 3 257 934
- JP-A- 4 273 718
- JP-A- 59 054 340
- US-A- 5 237 633
- US-A1- 2005 135 129

## Description

La présente invention se rapporte à un générateur de tension alternative qui utilise des interrupteurs de puissance JFET (Junction Field Effect Transistor ou Transistor à Effet de Champ à Jonction) de type normalement fermé pour délivrer une tension alternative à partir d'un bus de tension continue et qui comporte un dispositif de limitation de courant de ce bus continu. Un tel générateur peut être utilisé en particulier dans un variateur de vitesse ou dans une alimentation électrique sauvegardée (UPS ou Uninterruptible Power Supply). Un onduleur qui comportent toutes les caractéristiques du préambule de la revendication 1 est divulgué dans le document JP2006223032.

Un transistor JFET est un interrupteur électronique de puissance connu qui comporte une Grille de commande dont la fonction est d'autoriser ou non le passage d'un courant entre un Drain et une Source. Un tel transistor est dit de type normalement fermé (ou "Normally ON") si la tension V_{DS} entre le Drain et la Source est proche de zéro lorsque la tension V_{GS} entre la Grille et la Source est proche de zéro. Cela signifie que le chemin Drain-Source est passant ou conducteur en l'absence de tension de commande V_{GS} ou en présence d'une faible tension V_{GS}. Inversement un transistor JFET est dit du type normalement ouvert (ou "normally OFF") si le chemin Drain-Source n'est pas conducteur en l'absence de tension V_{GS} entre Grille et Source.

Il s'avère qu'un interrupteur électronique de type JFET normalement fermé offre de meilleures performances que d'autres types d'interrupteurs électroniques de puissance commandés en tension, tels que des MOSFET, des IGBT ou même des interrupteurs de type JFET normalement ouvert. En effet, un tel interrupteur présente notamment les avantages d'être plus rapide à commuter, de générer moins de pertes en conduction à l'état passant (faible résistance R_{DSon} à l'état passant), d'avoir une meilleure tenue en température et d'avoir une taille plus petite.

Néanmoins, tout interrupteur électronique du type normalement fermé présente l'inconvénient d'être à l'état passant (ou fermé) en l'absence de tension de commande sur sa Grille (Gate). Cette caractéristique n'est pas sécurisante pour la commande de courants importants puisque cet interrupteur laisse passer le courant entre Drain et Source en l'absence de commande sur la Grille. Il en résulte évidemment des risques potentiels importants pour la sécurité des biens et des personnes.

De façon usuelle, un générateur de tension alternative est destiné à commander une charge, appelée par la suite charge utilisateur, avec une tension alternative qui peut être d'amplitude et de fréquence variables, au moyen d'une commande par Modulation à Largeur d'Impulsions (MLI ou PWM). Cette charge utilisateur peut être en particulier un moteur électrique dans le cas d'un variateur de vitesse ou un réseau électrique alternatif utilisateur dans le cas d'une alimentation sauvegardée. Le générateur de tension alternative comporte habituellement un module onduleur qui est alimenté par un bus continu de puissance et qui est doté de deux interrupteurs électroniques de puissance par bras ou phase.

Chacun de ces interrupteurs électroniques de puissance est commandé par un circuit de commande qui est alimenté par un module alimentation, par exemple de type alimentation à découpage (alimentation de type SMPS : Switched Mode Power Supply), ce module alimentation recevant lui-même son énergie à partir du bus de puissance.

L'utilisation de transistors de type JFET normalement fermé comme interrupteurs électroniques de puissance du module onduleur d'un générateur de tension alternative présente les avantages décrits précédemment, notamment de très faibles pertes de conduction. Cependant cela nécessite qu'à la mise sous tension, il faut être capable de commander au plus vite l'ouverture de ces transistors JFET pour éviter un court-circuit dans chaque bras du module onduleur. En plus des risques de détérioration et de sécurité, un tel court-circuit empêcherait aussi de faire monter la tension du bus continu de puissance du générateur. C'est pourquoi il convient de trouver un dispositif qui permette une montée en tension très rapide du bus de puissance et du module alimentation, de façon à pouvoir alimenter rapidement les circuits de commande des transistors de puissance JFET.

Le but de l'invention est donc de trouver un dispositif simple qui permet notamment, lors d'une mise sous tension, de limiter le courant circulant dans le bus continu de puissance et de fournir rapidement l'énergie nécessaire pour l'alimentation des circuits de commande des transistors JFET du module onduleur.

Pour cela, l'invention décrit un générateur de tension alternative comportant une source de tension continue qui alimente un bus de puissance, un condensateur de bus connecté entre une borne positive et une borne négative du bus de puissance, un module onduleur alimenté par le bus de puissance et doté de plusieurs transistors de puissance de type JFET normalement fermé pour délivrer une tension alternative. Le générateur comprend un transistor de limitation de courant de type JFET normalement fermé qui est placé sur le bus de puissance en série entre le condensateur de bus et le module onduleur, le courant de limitation du transistor de limitation étant inférieur au courant de limitation de chacun des transistors de puissance.

Selon une caractéristique, la source du transistor de limitation est raccordée à la grille du transistor de limitation. Selon une autre caractéristique, le générateur de tension alternative comporte un module alimentation qui est alimenté par le bus de puissance et qui délivre une tension de sortie à un module de commande destiné à piloter les grilles des transistors de puissance.

Selon une autre caractéristique, la source de tension continue comporte un module redresseur qui est alimenté par un réseau d'alimentation extérieur et qui est doté de plusieurs diodes.

Un tel générateur peut notamment être utilisé dans un variateur de vitesse destiné à délivrer une tension alternative à un moteur électrique ou dans une alimentation sauvegardée destiné à délivrer une tension alternative à un réseau électrique alternatif.

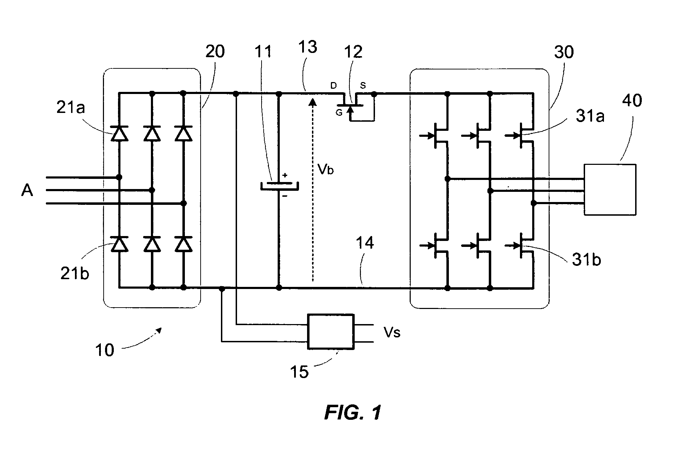

D'autres caractéristiques et avantages vont apparaître dans la description détaillée qui suit en se référant à un mode de réalisation donné à titre d'exemple et représenté par la figure 1 qui montre une structure simplifiée d'un générateur de tension alternative conforme à l'invention.

En référence à la figure 1, un générateur de tension alternative 10 comporte une source de tension continue qui alimente un bus de puissance avec une tension continue Vb (par exemple de l'ordre de 200 à 800Vcc ou plus, suivant les conditions d'utilisation). Le bus de puissance est composé d'une ligne positive 13 et d'une ligne négative 14. Un condensateur de bus 11 est habituellement utilisé pour maintenir constante la tension continue Vb du bus de puissance. Ce condensateur de bus 11 est connecté entre une borne positive et une borne négative du bus de puissance et est généralement de type électrolytique.

Dans l'exemple de la figure 1, la source de tension continue comprend un module redresseur 20 qui est destiné à redresser une tension triphasée alternative provenant d'un réseau d'alimentation extérieur A (par exemple un réseau électrique triphasé 380Vac). Ce module redresseur utilise avantageusement des diodes 21 a, 21 b qui sont plus économiques et plus fiables que des thyristors. Alternativement, la source de tension continue pourrait également provenir directement d'une batterie délivrant une tension continue Vb, en particulier dans le cas d'une alimentation sauvegardée.

Le générateur de tension alternative 10 comporte ensuite un module onduleur 30 permettant, à partir du bus de puissance, de commander une charge utilisateur 40 avec une tension alternative qui peut être d'amplitude et de fréquence variables. Le module onduleur 30 utilise une commande par Modulation à Largeur d'Impulsions (MLI ou PWM). Pour cela, il est doté de deux interrupteurs électroniques de puissance 31 a, 31 b en série sur chaque phase. Ces interrupteurs 31 a, 31 b sont des transistors de puissance de type JFET normalement fermé (c'est-à-dire à l'état passant en l'absence de tension sur la Grille du transistor) à canal N. On pourrait aussi utiliser des transistors JFET à canal P. Les transistors de puissance 31 a, 31 b sont commandés par un module de commande, non représenté sur la figure.

L'exemple de la figure 1 montre un générateur de tension alternative 10 triphasé : le module onduleur 30 comporte trois bras pour délivrer une tension alternative triphasée à la charge utilisateur 40, chaque bras étant doté de deux transistors de puissance 31 a, 31 b en série entre une borne positive et une borne négative du bus de puissance, soit un total de six transistors de puissance.

Le module de commande des transistors de puissance 31a, 31 b est alimenté par un module alimentation 15 qui délivre une tension de sortie Vs continue et qui est lui-même alimenté à partir du bus de puissance. Comme indiqué en figure 1, le raccordement du module alimentation 15 au bus de puissance se fait en amont du condensateur de bus 11. entre le module redresseur 20 et le condensateur 11. Le module alimentation 15 est de préférence du type alimentation à découpage (SMPS), ce qui permet d'avoir une montée rapide de la tension de sortie Vs.

Actuellement, les transistors de type JFET normalement fermé sont souvent réalisés en carbure de silicium (SiC), mais on pourrait aussi utiliser tout matériau à grande énergie de bande interdite (appelé également matériau à grand gap ou "wide-band gap material"), c'est-à-dire présentant une faible résistance à l'état passant R_{DSon} et capable de supporter des tensions importantes, comme par exemple du nitrure de gallium (GaN).

A cause de l'utilisation de transistors de puissance 31 a,31 b de type normalement fermé, il faut évidemment s'assurer que le module de commande de ces transistors est alimenté très rapidement après le début de la montée en tension du bus de puissance, pour éviter un court-circuit dans les différents bras du module onduleur 30. Il faut donc s'assurer que le module alimentation 15 est capable de fournir la tension de sortie Vs rapidement après le début de la montée en tension du bus de puissance.

C'est pourquoi l'invention prévoit que le générateur de tension alternative 10 comporte un dispositif de limitation du courant circulant dans le bus de puissance. Ce dispositif comprend un transistor de limitation de courant 12 de type JFET normalement fermé qui est placé sur le bus de puissance, en série entre le condensateur de bus 11 et le module onduleur 30. Ce transistor de limitation JFET 12 est monté en limiteur de courant, c'est-à-dire que la source S du transistor 12 est raccordée à la grille G du transistor 12.

Dans le mode de réalisation de la figure 1, le transistor de limitation JFET 12 est placé sur la ligne positive 13 du bus de puissance, le drain D du transistor 12 étant connecté côté condensateur 11 et la source S du transistor 12 étant connectée côté module onduleur 30. On pourrait également placer le transistor de limitation JFET 12 sur la ligne négative 14 du bus de puissance, le drain D du transistor 12 étant alors connecté côté module onduleur 30 et la source S du transistor 12 étant connectée côté condensateur 11.

Préférentiellement, la grille G et la source S sont directement raccordées entre elles de sorte que la tension grille-source V_{GS} du transistor de limitation JFET 12 reste toujours égale à zéro. On pourrait aussi envisager que la grille G et la source S soient raccordées entre elles via une faible résistance pour maintenir une tension V_{GS} légèrement différente de zéro. Cela permettrait d'ajuster la valeur du courant de limitation à une valeur différente de celle correspondant à une tension V_{GS} nulle.

Le transistor de limitation JFET 12 est choisi pour que son courant de limitation I_{L2} soit d'une valeur inférieure au courant de limitation I_{L3} de chacun des différents transistors de puissance JFET 31 a, 31 b (par exemple I_{L3} = 20A et I_{L2} = 10A). En phase de conduction normale, le transistor de limitation JFET 12 a une résistance R_{DSon} à l'état passant qui est très faible, tant que le courant I_{DS} circulant entre Drain et Source reste inférieur au courant de limitation I_{L2}. Lorsque que le courant I_{DS} atteint le courant de limitation I_{L2}, le transistor de limitation JFET 12 passe alors en phase de limitation durant laquelle le courant I_{DS} reste limité à une valeur proche de I_{L2} tandis que la résistance R_{DS} et donc la tension V_{DS} entre Drain et Source augmentent rapidement.

Le principe de fonctionnement du générateur 10 est le suivant :

On suppose qu'avant la mise sous tension du générateur 10, le condensateur de bus 11 est déchargé. Les transistors 31 a, 31 b des différents bras du module onduleur 30 sont à l'état fermé (passant) car aucune commande n'est appliquée sur leur grille respective. De même, le transistor de limitation 12 est à l'état fermé. Lors du démarrage de la montée en tension du bus de puissance, un courant circule dans le bus de puissance car les transistors 12, 31a, 31b sont tous passants. Ce courant augmente rapidement jusqu'à atteindre le courant de limitation I_{L2} du transistor de limitation 12 JFET. Celui-ci va alors passer en phase de limitation, ce qui entraîne que le courant I_{DS} circulant dans le bus va se maintenir à une valeur proche du courant de limitation I_{L2}, et que la tension V_{DS} du transistor de limitation 12 va augmenter rapidement. Le transistor de limitation 12 devient ainsi une source de courant.

Le courant de limitation I_{L3} étant supérieur au courant de limitation I_{L2}, les transistors de puissance 31a, 31 b ne passent pas en phase de limitation et il se développe donc peu de tension à leurs bornes. Ainsi, c'est principalement la tension V_{DS} du transistor de limitation 12 qui crée une tension de bus permettant de commencer la charge du condensateur de bus 11 et permettant d'alimenter le module alimentation 15 de façon à fournir rapidement une tension de sortie Vs pour le module de commande des transistors de puissance 31 a, 31 b.

Dès que le module de commande est alimenté par la tension Vs, il peut commander un ordre d'ouverture aux transistors de puissance 31 a, 31 b, de façon à ouvrir le circuit de puissance. Le courant I_{DS} circulant dans le transistor de limitation 12 va alors chuter rapidement et donc repasser sous le courant de limitation I_{L2}, permettant au transistor de limitation 12 de sortir de la phase de limitation et de revenir en phase de conduction normale. Le condensateur de bus 11 finit alors de se charger de façon à obtenir la bonne tension de bus Vb nominale entre ses bornes. L'étape de démarrage est terminée et le générateur de tension alternative passe alors en fonctionnement normal.

Grâce à la différence entre le courant de limitation I_{L2} du transistor de limitation 12 et celui I_{L3} des transistors de puissance 31a, 31b, la dissipation thermique lors du démarrage est principalement concentrée sur le transistor de limitation 12. Ceci permet donc de n'avoir, pour le générateur 10, qu'un seul transistor JFET de taille importante pour tenir la phase transitoire de démarrage, dont la durée est typiquement de l'ordre de quelques millisecondes voire dizaines de millisecondes seulement, ce qui évite un trop grand échauffement du transistor de limitation 12.

En fonctionnement normal, comme le courant nominal circulant dans le bus de puissance est inférieur au courant de limitation I_{L2} du transistor de limitation 12 de type JFET normalement fermé, la dissipation thermique du transistor de limitation 12 est donc très faible, occasionnant très peu de pertes.

Les transistors de puissance 31a, 31b sont évidemment choisis pour avoir un courant de limitation I_{L3} d'une valeur supérieure au courant maximum susceptible de circuler dans la charge 40, pour éviter qu'ils passent en phase de limitation. Par ailleurs, le transistor de limitation JFET 12 doit être choisi pour que la tension V_{DS} maximale qu'il ait à supporter durant la phase de limitation soit inférieure à sa tension d'avalanche.

## Revendications

1. Générateur de tension alternative (10) comportant une source de tension continue (20) qui alimente un bus de puissance, un condensateur de bus (11) connecté entre une borne positive et une borne négative du bus de puissance, un module onduleur (30) alimenté par le bus de puissance et doté de plusieurs transistors de puissance (31a, 31 b) de type JFET normalement fermé pour délivrer une tension alternative, **caractérisé en ce que** le générateur (10) comprend un transistor de limitation de courant (12) de type JFET normalement fermé qui est placé sur le bus de puissance en série entre le condensateur de bus (11) et le module onduleur (30), le courant de limitation du transistor de limitation (12) étant inférieur au courant de limitation de chacun des transistors de puissance (31a, 31 b) du module onduleur (30).

2. Générateur de tension selon la revendication 1, **caractérisé en ce que** la source (S) du transistor de limitation (12) est raccordée à la grille (G) du transistor de limitation (12).

3. Générateur de tension selon la revendication 2, **caractérisé en ce que** le transistor de limitation (12) est placé sur une ligne positive (13) du bus de puissance, le drain (D) du transistor de limitation (12) étant connecté côté condensateur de bus (11) et la source (S) du transistor de limitation (12) étant connectée côté module onduleur (30).

4. Générateur de tension selon la revendication 1, **caractérisé en ce qu'**il comporte un module alimentation (15) qui est alimenté par le bus de puissance et qui délivre une tension de sortie (Vs) à un module de commande destiné à piloter les grilles des transistors de puissance (31 a, 31 b) du module onduleur (30).

5. Générateur de tension selon la revendication 1, **caractérisé en ce que** le module onduleur (30) comporte trois bras pour délivrer une tension alternative triphasée, chaque bras étant doté de deux transistors de puissance (31 a, 31 b) de type JFET normalement fermé en série entre la borne positive et la borne négative du bus de puissance.

6. Générateur de tension selon la revendication 1, **caractérisé en ce que** la source de tension continue comporte un module redresseur (20) qui est alimenté par un réseau d'alimentation extérieur et qui est doté de plusieurs diodes (21a, 21 b).

7. Variateur de vitesse destiné à délivrer une tension alternative à un moteur électrique (40), **caractérisé en ce qu'**il comporte un générateur de tension alternative (10) selon l'une des revendications 1 à 6.

8. Alimentation sauvegardée destinée à délivrer une tension alternative à un réseau électrique alternatif (40), **caractérisé en ce qu'**elle comporte un générateur de tension alternative (10) selon l'une des revendications 1 à 5.

## Claims

1. Alternating voltage generator (10) comprising a direct voltage source (20) that supplies a power bus, a bus capacitor (11) connected between a positive terminal and a negative terminal of the power bus, an inverter module (30) supplied by the power bus and equipped with several normally-on JFET power transistors (31 a, 31 b) in order to deliver an alternating voltage, **characterized in that** the generator (10) comprises a current limiting normally-on JFET transistor (12) which is located on the power bus in series between the bus capacitor (11) and the inverter module (30), the limiting current of the limiting transistor (12) being less than the limiting current of each of the power transistors (31 a, 31 b) of the inverter module (30).

2. Voltage generator according to Claim 1, **characterized in that** the source (S) of the limiting transistor (12) is connected to the gate (G) of the limiting transistor (12).

3. Voltage generator according to Claim 2, **characterized in that** the limiting transistor (12) is located on a positive line (13) of the power bus, the drain (D) of the limiting transistor (12) being connected on the side of the bus capacitor (11) and the source (S) of the limiting transistor (12) being connected on the side of the inverter module (30).

4. Voltage generator according to Claim 1, **characterized in that** it comprises a power supply module (15) that is supplied by the power bus and which delivers an output voltage (Vs) to a control module intended to control the gates of the power transistors (31 a, 31 b) of the inverter module (30).

5. Voltage generator according to Claim 1, **characterized in that** the inverter module (30) comprises three branches for delivering a three-phase alternating voltage, each branch being equipped with two normally-on JFET power transistors (31 a, 31 b) in series between the positive terminal and the negative terminal of the power bus.

6. Voltage generator according to Claim 1, **characterized in that** the direct voltage source comprises a rectifier module (20) that is supplied by an external power supply network and which is equipped with several diodes (21 a, 21 b).

7. Speed controller intended to deliver alternating voltage to an electric motor (40), **characterized in that** it comprises an alternating voltage generator (10) according to one of Claims 1 to 6.

8. Uninterruptible power supply intended to deliver an alternating voltage to an alternative electrical network (40), **characterized in that** it comprises an alternating voltage generator (10) according to one of Claims 1 to 5.

## Patentansprüche

1. Wechselspannungsgenerator (10), mit einer Gleichspannungsquelle (20), die einen Leistungsbus versorgt, einem Buskondensator (11), der zwischen einen positiven Anschluss und einen negativen Anschluss des Leistungsbusses geschaltet ist, und einem Wechselrichtermodul (30), das durch den Leistungsbus versorgt wird und mit mehreren Leistungstransistoren (31 a, 31 b) des normalerweise gesperrten JFET-Typs versehen ist, um eine Wechselspannung zu liefern, **dadurch gekennzeichnet, dass** der Generator (10) einen Strombegrenzungstransistor (12) des normalerweise gesperrten JFET-Typs enthält, der in dem Leistungsbus zwischen dem Buskondensator (11) und dem Wechselrichtermodul (30) in Reihe angeordnet ist, wobei der Grenzstrom des Begrenzungstransistors (12) niedriger ist als der Grenzstrom jedes Leistungstransistors (31 a, 31 b) des Wechselrichtermoduls (30).

2. Spannungsgenerator nach Anspruch 1, **dadurch gekennzeichnet, dass** die Source (S) des Begrenzungstransistors (12) mit dem Gate (G) des Begrenzungstransistors (12) verbunden ist.

3. Spannungsgenerator nach Anspruch 2, **dadurch gekennzeichnet, dass** der Begrenzungstransistor (12) in einer positiven Leitung (13) des Leistungsbusses angeordnet ist, der Drain (D) des Begrenzungstransistors (12) auf Seiten des Buskondensators (11) angeschlossen ist und die Source (S) des Begrenzungstransistors (12) auf Seiten des Wechselrichtermoduls (30) angeschlossen ist.

4. Spannungsgenerator nach Anspruch 1, **dadurch gekennzeichnet, dass** er ein Versorgungsmodul (15) enthält, das durch den Leistungsbus gespeist wird und eine Ausgangsspannung (Vs) an ein Steuermodul liefert, das dazu bestimmt ist, die Gates der Leistungstransistoren (31 a, 31 b) des Wechselrichtermoduls (30) zu steuern.

5. Spannungsgenerator nach Anspruch 1, **dadurch gekennzeichnet, dass** das Wechselrichtermodul (30) drei Zweige aufweist, um eine Dreiphasen-Wechselspannung zu liefern, wobei jeder Zweig mit zwei Leistungstransistoren (31a, 31b) des normalerweise gesperrten JFET-Typs in einer Reihenschaltung zwischen dem positiven Anschluss und dem negativen Anschluss des Leistungsbusses versehen ist.

6. Spannungsgenerator nach Anspruch 1, **dadurch gekennzeichnet, dass** die Gleichspannungsquelle ein Gleichrichtermodul (20) enthält, das durch ein externes Versorgungsnetz gespeist wird und mit mehreren Dioden (21 a, 21 b) versehen ist.

7. Drehzahlregler, der dazu bestimmt ist, an einen Elektromotor (40) eine Wechselspannung zu liefern, **dadurch gekennzeichnet, dass** er einen Wechselspannungsgenerator (10) nach einem der Ansprüche 1 bis 6 enthält.

8. Unterbrechungsfreie Stromversorgung, die dazu bestimmt ist, an ein elektrisches Wechselspannungsnetz (40) eine Wechselspannung zu liefern, **dadurch gekennzeichnet, dass** sie einen Wechselspannungsgenerator (10) nach einem der Ansprüche 1 bis 5 enthält.
